# EUROPEAN PATENT SPECIFICATION

(11) **EP 2 287 851 B1**
(45) Date of publication and mention of the grant of the patent: **16.12.2015**
(21) Application number: 09735147.2
(22) Date of filing: 19.02.2009
(51) Int. Cl.: G21C 3/32, G21C 3/322, G21C 3/34

(54) **BAFFLE GRID OF A NUCLEAR REACTOR FUEL ASSEMBLY**
ABDECKGITTER EINER KERNREAKTOR-BRENNSTOFFBAUGRUPPE
GRILLE DÉFLECTRICE D'UN ASSEMBLAGE DE COMBUSTIBLE D'UN RÉACTEUR NUCLÉAIRE

(30) Priority: 24.04.2008 RU 2008115912
(43) Date of publication of application: 23.02.2011
(73) Proprietor: Publichnoye Akcionernoe Obshchestvo "Mashinostroitelny Zavod", Elektrostal, 144001 (RU)
(72) Inventor: AKSENOV, Petr Mikhailovich, Moskovskaya ob. 144010 (RU); LUZAN, Yury Vasilyevich, Moskovskaya ob. 144004 (RU); GAMYGIN, Yury Leonidovich, Moskovskaya ob. 144003 (RU); LERNER, Alexandr Yefimovich, Moskovskaya ob. 142400 (RU); KOCHERGIN, Viktor Mikhailovich, Moskovskaya ob. 144001 (RU); SHUMEEV, Alexandr Ivanovich, Moskovskaya ob. 142115 (RU)
(74) Representative: Einsel, Martin
(86) International application number: PCT/RU2009/000078
(87) International publication number: WO 2009/131488

(56) References cited:
- GB-A- 1 088 022
- GB-A- 1 088 022
- JP-A- H1 164 557
- RU-A- 2006 112 916
- RU-C1- 2 088 982
- RU-C1- 2 294 570
- US-A1- 2003 185 334

## Description

The invention relates to a baffle grid of a nuclear reactor fuel assembly designed in the form of a plate having parallel through slotted grooves and a through hole in the center thereof, wherein blades are provided on bridges between the grooves on one side of the grid.

The field of the invention is the nuclear industry, in particular the invention relates to the elements of a fuel assembly that are used to prevent fuel elements from falling outside of the reactive core and to level out the coolant temperature at the output of the fuel assembly.

A prior art baffle grid of the slotted type, for example, 440.01.004-01, for the fuel assembly of a water-moderated VVER-440 nuclear reactor, is designed in the form of a hexagonal plate 2 mm thick. The grid has 21 grooves (7 mm wide with 4.5 mm bridges between the groove) for coolant passage and a hole for the central pipe. The grid is mounted at the bottom end of the cap body and connected thereto by welding at three corners. The grid is made of rolled section of stainless steel grade X18H10T (A.N. Brik and D.A. Oleksyuk, "Methodology of Measuring the Effect of Incomplete Coolant Stirring on the Readings of the Cassette Thermocouples of VVER-440 Reactors," 16th AFR Symposium on the Physics and Safety of Water-Moderated Reactors, Bratislava, Slovakia, September 25-29, 2006).

Another prior art baffle grid of the slotted type for a fuel assembly is designed in the form of a hexagonal plate with grooves (RU2088982 C1). The baffle grid is mounted at the bottom end of the cap body of the fuel assembly and is provided for stabilizing the coolant flow and for preventing fuel rods from entrainment in case of their damage.

The prior art grid is disadvantageous because the coolant is not filtered and is stirred incompletely at the output of the fuel assembly. This disadvantage affects adversely the operating characteristics of the reactor. Low structural strength and rigidity are another disadvantage of the prior art grid.

Further, US 2003/0185334 A1 disclose a core inlet structure for coolant disposed in a reactor pressure vessel.

A spacer grid for a nuclear reactor fuel assembly is shown in GB 1,088,022 A.

JP 11-64557 A show a fuel assembly preventing foreign matters flowing along with a coolant.

It is an object of the invention to improve the hydraulic and strength characteristics of the grid.

This object is achieved in a baffle grid of a fuel assembly that is made in the form of a plate having parallel slotted grooves and a through hole in the center thereof, with blades provided on the bridges between the grooves on one side of the plate, wherein said blades are made in the form of flat plates inclined at an angle to the longitudinal axis of the fuel assembly, or wherein said grooves and bridges with blades provided between them are grouped in at least two rows and are positioned at an angle to one another in the plane of the grid.

Blades provided on the bridges between the grooves on one side on the plate achieve a technical effect consisting in improved structural strength and rigidity of the grid, improved stirring of the coolant and filtration thereof, and, therefore, improved operating characteristics of the reactor.

In particular embodiments of the invention, the blades are inclined at an angle of 15° to 20° toward the coolant output, improving the stirring of the coolant still further by swirling the flow and improving the filtration thereof.

The grooves and bridges provided with blades between them may be grouped in at least two rows and positioned at an angle to one another in the grid plane. In particular, when the plate has a hexagonal shape, the grooves and bridges provided with blades between them are grouped in three rows and positioned at an angle of 120° to one another in the grid plane.

### BRIEF DESCRIPTION OF THE DRAWINGS

The invention is illustrated by the drawings wherein:

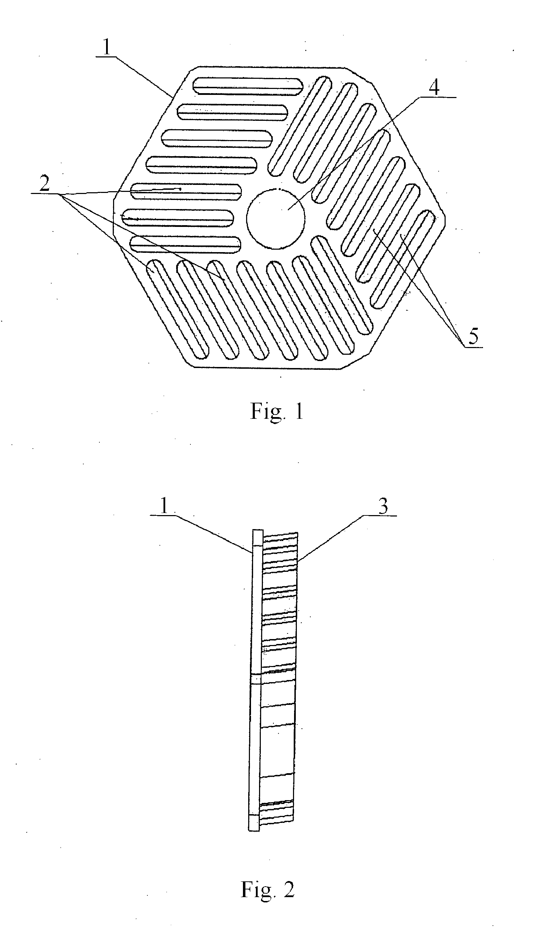

- **FIG. 1**: is a front view of the present baffle grid.
- **FIG. 2**: is a side view of the present baffle grid.

### DESCRIPTION OF AN EMBODIMENT OF THE INVENTION

The baffle plate comprises a plate 1 in the form of a hexagon having parallel slotted grooves 2 and blades 3 in the form of flat plates provided on one side of the plate 1 on bridges 5 between the grooves 2 and a through hole 4 in the center for the central pipe of the fuel assembly. The grooves 2 and bridges 5 provided with the blades 3 between them are grouped in three rows and positioned at an angle of 120° to one another in the plane of the grid. The baffle grid is made of steel grade X18H10T.

Comparative tests of the closest prior art grid and the present grid were conducted.

For comparative computations to be made, the grid models were subjected to uniformly distributed pressure built up by the coolant velocity head of 4.87 kPa at a maximum coolant flow rate of 130 m³/hour.

Evaluation of the hydraulic resistance of the grids showed that the additional resistance of the present grid in which the coolant is swirled at 15° at a 5:1 ratio of length to thickness of the plates is low and does not exceed 15%.

Computations of the stress-deformed state showed that the greatest flexures develop in the unsecured corners of the prior art grid and the greatest equivalent stresses build up near the periphery of the net, in the corners where it is welded to the cap. The greatest stresses in the central part develop in the area of the grooves extending from the corners where the grid is welded to the cap. In the present grid, the greatest flexures develop in the center, and the greatest equivalent stresses build up near the periphery of the net, in the corners where it is welded to the cap.

The maximum stresses of the present grid are significantly lower than those of the prior art grid, which is evidence that the present grid is structurally stronger. The present grid also has a rigidity and dynamic characteristic an order of magnitude higher than the prior art grid (see: Table 1). An analysis shows that the maximum equivalent strength of the present grid is significantly below the tolerable stresses for any state of the metal, and that, therefore, the width of the bridges between the grooves can be reduced to, for example, 3 or 4 mm and for this reason the width of a groove increased to compensate for a certain increase in the hydraulic resistance of the grid because of the blades used therein.

The dynamic characteristics of the prior art and present grids are analyzed by the impact excitation method that helps produce simultaneously the frequency spectrums of an external effect (force) and response (acceleration) of points of an item as a result of the force applied thereto.

The dynamic tests have shown that the present grid has a more optimal amplitude-frequency response than the prior art grid (see: Table 2).

With the hydraulic resistance changing insignificantly, the present grid has a higher structural strength and rigidity, and ensures complete stirring and filtration of the coolant, as a result of which the characteristics of the reactor, for example, the water-moderated VVER-440 reactor, are improved.

**Table 1**

| Computation of the Stress-Deformed State | | |
|---|---|---|
| | Prior art grid | Present grid |
| Equivalent stress, MPa | 32.8 | 8.8 |
| Flexure, mm | 0.051 | 0.002 |
| First natural frequency, Hz | 417 | 686 |

**Table 2**

| Results of Dynamic Tests of the First Oscillation Form | | |
|---|---|---|
| | Prior art grid | Present grid |
| Frequency, Hz | 1,932 | 2,475 |
| Acceleration, (m/s²)/N | 10,800 | 9,870 |
| Modal attenuation speed, % | 0.123 | 0.109 |

## Claims

1. A baffle grid of a nuclear reactor fuel assembly designed in the form of a plate (1) having parallel through slotted grooves (2) and a through hole (4) in the center thereof, wherein blades (3) are provided on bridges (5) between the grooves (2) on one side of the grid, **characterized in that** said blades (3) are made in the form of flat plates inclined at an angle to the longitudinal axis of the fuel assembly.

2. The baffle grid as claimed in claim 1, wherein the blades (3) are inclined at an angle of 15° to 20° to the longitudinal axis of the fuel assembly.

3. A baffle grid of a nuclear reactor fuel assembly designed in the form of a plate (1) having parallel through slotted grooves (2) and a through hole (4) in the center thereof, wherein blades (3) are provided on bridges (5) between the grooves (2) on one side of the grid, **characterized in that** said grooves (2) and bridges (5) with blades (3) provided between them are grouped in at least two rows and are positioned at an angle to one another in the plane of the grid.

4. The baffle grid as claimed in claim 3, wherein the grid is in the form of a hexagon, and the grooves (2) and bridges (5) with blades (3) provided between them are grouped in three rows and are positioned at an angle of 120° to one another in the plane of the grid.

## Patentansprüche

1. Abdeckgitter einer Brennstoffbaugruppe eines Kernreaktors, gestaltet in der Form einer Platte (1) mit parallelen durchgehenden schlitzförmigen Nuten (2) und einem Durchgangsloch (4) in deren Mitte, wobei Lamellen (3) auf Stegen (5) zwischen den Nuten (2) auf einer Seite des Gitters vorgesehen sind,
**dadurch gekennzeichnet,**
**dass** die Lamellen (3) in der Form von flachen Platten ausgebildet sind, die in einem Winkel zur Längsachse der Brennstoffbaugruppe geneigt sind.

2. Abdeckgitter nach Anspruch 1, in welchem die Lamellen (3) in einem Winkel von 15° bis 20° zur Längsachse der Brennstoffbaugruppe geneigt sind.

3. Abdeckgitter einer Brennstoffbaugruppe eines Kernreaktors, gestaltet in der Form einer Platte (1) mit parallelen durchgehenden schlitzförmigen Nuten (2) und einem Durchgangsloch (4) in deren Mitte, wobei Lamellen (3) auf Stegen (5) zwischen den Nuten (2) auf einer Seite des Gitters vorgesehen sind,
**dadurch gekennzeichnet,**
**dass** die Nuten (2) und die Stege (5) mit den zwischen ihnen vorgesehenen Lamellen (3) in zumindest zwei Reihen gruppiert sind und in einem Winkel zueinander in der Ebene des Gitters positioniert sind.

4. Abdeckgitter nach Anspruch 3,
in welchem das Gitter in der Form eines Sechsecks aufgebaut ist und die Nuten (2) und Stege (5) mit den zwischen ihnen vorgesehenen Lamellen (3) in drei Reihen gruppiert sind und in einem Winkel von 120° zueinander in der Ebene des Gitters positioniert sind.

## Revendications

1. Grille déflectrice d'un assemblage de combustible d'un réacteur nucléaire, conçue sous la forme d'une plaque (1) présentant des rainures (2) parallèles continues en forme de fentes et un trou traversant (4) en son centre, des lamelles (3) étant prévues sur des nervures (5) entre les rainures (2) d'un côté de la grille,
**caractérisée en ce que**
les lamelles (3) sont réalisées sous la forme de plaques plates inclinées en formant un angle avec l'axe longitudinal de l'assemblage de combustible.

2. Grille déflectrice selon la revendication 1, dans laquelle les lamelles (3) sont inclinées en formant un angle de 15° à 20° avec l'axe longitudinal de l'assemblage de combustible.

3. Grille déflectrice d'un assemblage de combustible d'un réacteur nucléaire, conçue sous la forme d'une plaque (1) présentant des rainures (2) parallèles continues en forme de fentes et un trou traversant (4) en son centre, des lamelles (3) étant prévues sur des nervures (5) entre les rainures (2) d'un côté de la grille,
**caractérisée en ce que**
les rainures (2) et les nervures (5) à lamelles (3) prévues entre les rainures sont groupées en au moins deux rangées et positionnées en formant un angle entre elles dans le plan de la grille.

4. Grille déflectrice selon la revendication 3,
dans laquelle la grille se présente sous la forme d'un hexagone et les rainures (2) et les nervures (5) à lamelles (3) prévues entre les rainures sont groupées en trois rangées et positionnées en formant un angle de 120° entre elles dans le plan de la grille.
